# EUROPÄISCHE PATENTANMELDUNG

(11) **EP 0 808 944 A2**
(43) Veröffentlichungstag der Anmeldung: **26.11.1997**
(21) Anmeldenummer: 97103169.5
(22) Anmeldetag: 27.02.1997
(51) Int. Cl.: D21H 13/00

(54) **Herstellung von thermoformbaren Bauteilen**

(30) Priorität: 21.05.1996 DE 19620289
(71) Anmelder: BECKER GROUP EUROPE GmbH, 42285 Wuppertal (DE)
(72) Erfinder: Müller-Bardarowa, Liliane, 47906 Kempen (DE); Klein, Burkhard, 47929 Grefrath (DE); Weitz, Axel, 47608 Geldern (DE); Prömper, Eugen, Dr., 41751 Viersen (DE)

(57) **Zusammenfassung**

Die Erfindung betrifft ein Verfahren zur Herstellung von plattenförmigen oder konturierten Bauteilen aus einer wäßrigen Suspension, die 20 bis 50 Masse-% Naturfasern, bis 4 Masse-% Fixierungsmittel und Rest pulver- und/oder faserförmiges thermoplastisches Material als Feststoffe enthält, durch Anschwemmen der Suspension an ein Sieb, Trocknen, Erwärmen und Formen des Bauteils unter Preßdruck.

## Beschreibung

Die Erfindung betrifft die Herstellung von Bauteilen, wie plattenförmigem Halbzeug und konturierten Formkörpern.

Die EP 0 039 292 offenbart die Herstellung von Bauteilen aus einer Suspension aus Glasfasern, Polypropylen (PP), Pulver, Bindefasern und anderen Hilfsstoffen und Formen von Bauteilen dieser Suspension unter Anwendung von Preßdruck und Wärme.

Die DE 36 36 864 beschreibt die Verwendung einer Suspension aus Glasfasern und thermoplastischen Bindemitteln zur Herstellung von Formkörpern durch Anschwemmen, Trocknen, Aufheizen und Verpressen im Konturwerkzeug.

Aus der US-PS 4 929 308 ist die Verwendung einer Suspension aus anorganischen Verstärkungsfasern, z.B. Glasfasern oder organischen Fasern, mit hohem Schmelzpunkt, Bindefasern und thermoplastischem Pulver bekannt zur Herstellung von dreidimensionalen Formkörpern durch Anschwemmen, Trocknen, Aufheizen und Verpressen.

Glasfasern oder andere anorganische Verstärkungsfasern sind in der Handhabung unangenehm. Sie können Hautirritationen oder Allergien hervorrufen. Hochschmelzende synthetische Verstärkungsfasern sind ferenr teuer und teilweise im Recycling problematisch. Für die Herstellung von Faserstoffsuspensionen mit Glasfasern werden aufwendige Rezepturen mit einer Vielzahl von Chemikalien eingesetzt.

Diese Rezepturen sind schwierig handzuhaben und teilweise abwasserbelastend.

Der Erfindung liegt daher die Aufgabe zugrunde, thermoplastisch gebundene Formkörper oder Halbzeug unter weitestgehendem Verzicht auf synthetische Stoffe und Prozeßhilfsstoffe, wie Dispergier- oder Bindemittel, herzustellen.

Zur Lösung dieser Aufgabe wird erfindungsgemäß ein Verfahren zur Herstellung von plattenförmigen oder konturierten Bauteilen aus einer wäßrigen Suspension, die 20 bis 50 Masse-% Naturfasern, bis 4 Masse-% Fixierungsmittel und Rest pulver- und/oder faserförmiges thermoplastisches Material als Feststoffe enthält, vorgeschlagen, welches das Anschwemmen der Suspension an ein Sieb, Trocknen, Erwärmen und Formen des Bauteils unter Anwendung von Preßdruck umfaßt.

Gemäß einer bevorzugten Ausgestaltung des erfindungsgemäßen Verfahrens wird die wäßrige Suspension auf 0,4 bis 1,0 % Masse-% Feststoffanteil verdünnt. Der Anteil der Naturfasern am Feststoffanteil der Suspension sollte bevorzugt 30 bis 45 Masse-% betragen.

Quarternäre Ammoniumverbindungen als synthetische und/oder Polysaccharide als natürliche Fixierungsmittel können der Suspension bevorzugt zugesetzt werden. Der Anteil Fixierungsmittel auf natürlicher und/oder synthetischer Basis am Feststoffanteil der Suspension beträgt bevorzugt 0,2 bis 2,5 Masse-%.

Etwa je zur Hälfte kann das thermoplastische Material aus Pulver und aus Fasern bestehen. Als Naturfasern können Bastfasern (Flachs, Jute, Hanf) und/oder Hartfasern (Sisal, Ramie) und/oder Holzfasern zugesetzt werden.

Die Formgebung zu plattenförmigem Halbzeug oder konturierten Bauteilen kann auf irgendeinem der bekannten Verfahrenswege erfolgen, darunter
- Anschwemmen der Suspension an ein konturiertes Formsieb, ähnlich der Endkontur des Fertigteils, Entwässern, Trocknen und Aufheizen des Vorformlings auf eine Temperatur oberhalb des Schmelzpunktes der Polymermatrix und Pressen im gekühlten Formwerkzeug zum Formkörper,
- Anschwemmen der Faserstoffsuspension an ein Rund- oder Flachsieb, Trocknen, Aufheizen, Komprimieren und Abkühlen zu einem flächigen Halbzeug, das durch Fließpressen zu einem Formteil verarbeitet werden kann.

Die auf erfindungsgemaße Weise hergestellten Bauteile zeichnen sich dadurch aus, daß sie durch den Einsatz nachwachsender Naturfasern statt Glasfasern und durch reduzierten Chemikalienhaushalt in der Suspension geringere Umweltbelastung verursachen, ferner bessere Fließfähigkeit beim Preßprozeß sicherstellen und geringe Dichte bei guten mechanischen Festigkeitseigenschaften besitzen.

Anhand der folgenden Beispiele wird die Erfindung näher erläutert. Prozentangaben sind in Masse-% und bezogen auf den Gesamtfeststoffgehalt in der Suspension.

### Beispiel 1

In eine Bütte wurden in Wasser eingelegt:
- 40 %: Flachsfasern
- 30 %: PP-Pulver
- 30 %: PP-Schnittfasern
- 0,5%: quarternäre Ammoniumverbindungen als Fixierungsmittel

Nach der Verdünnung auf 0,5 % Feststoffanteil erfolgte die Anformung gegen ein konturiertes Sieb. Der Anformling wurde im Durchströmverfahren mit 130 °C heißer Luft getrocknet. Nach der Plastifizierung auf eine Formteiltemperatur von 210 °C erfolgte die Verpressung in einem bei 90 °C temperierten Werkzeug zum verdichteten Formteil.

### Beispiel 2

Die Rezeptur war wie beim Beispiel 1;
Nach der Verdünnung auf 0,5 % Feststoffanteil erfolgte auf einer Vliesanlage die Herstellung eines vorverdichteten plattenförmigen Halbzeugs. Das Halbzeug wurde nach der Plastifizierung bei 210 °C in einer Presse zu einem dreidimensionalen Formteil verpreßt.

### Beispiel 3

In eine Bütte wurden in Wasser eingelegt:
- 25 %: Flachsfasern
- 15 %: Sisalfasern
- 30 %: PP-Pulver
- 30 %: PP-Schnittfasern
- 0,3 %: quarternäre Ammoniumverbindung als Fixierungsmittel

Nach der Verdünnung auf 0,5 % Feststoffanteil erfolgte die Formteilherstellung wie bei den Beispielen 1 und 2.

### Beispiel 4

In eine Bütte wurden in Wasser eingelegt:
- 25 %: Flachsfasern
- 10 %: defibrierte Holzfasern
- 35 %: PP-Pulver
- 30 %: PP-Schnittfasern
- 0,3 %: quarternäre Ammoniumverbindung als Fixierungsmittel

Nach der Verdünnung auf 0,5 % Feststoffanteil erfolgte die Formteilherstellung wie bei den Beispielen 1 und 2.

### Beispiel 5

In eine Bütte wurden in Wasser eingelegt:
- 35 %: Flachsfasern
- 40 %: PP-Pulver
- 25 %: PP-Schnittfasern
- 0,3 %: quarternäre Ammoniumverbindung als synthetisches und
- 1,0 %: anionisches Polysaccharid als natürliches Fixierungsmittel

Nach der verdünnung auf 0,5 % Feststoffanteil erfolgte die Formteilherstellung wie bei den Beispielen 1 und 2.

### Beispiel 6

In eine Bütte wurden in Wasser einglegt:
- 35 %: Flachsfasern
- 38 %: PP-Pulver
- 25 %: PP-Schnittfasern
- 1,5%: kationisches Polysaccharid als natürliches Fixierungsmittel

Nach der verdünnung auf 0,5 % Feststoffanteil erfolgte die Formteilherstellung wie bei den Beispielen 1 und 2.

Die nach den Beispielen 1 bis 6 erzeugten Bauteile besaßen die in Tabelle 1 mitgeteilten Festigkeitseigenschaften.

**Tabelle 1**

| Beispiele | 1 | 2 | 3 | 4 | 5 | 6 |
|---|---|---|---|---|---|---|
| Dichte (g/cm³) | 1,03 | 1,08 | 1,05 | 1,03 | 1,02 | 1,03 |
| Biegefestigkeit (N/mm²) | 75 | 85 | 80 | 75 | 80 | 78 |
| Biege-E-Modul (N/mm²) | 2700 | 2800 | 2700 | 2550 | 2600 | 2600 |
| Schlagzähigkeit (mJ/mm²) | 45 | 55 | 50 | 35 | 40 | 40 |

## Patentansprüche

1. Verfahren zur Herstellung von plattenförmigen oder konturierten Bauteilen aus einer wäßrigen Suspension, die 20 bis 50 Masse-% Naturfasern, bis 4 Masse-% Fixierungsmittel und Rest pulver- und/oder faserförmiges thermoplastisches Material als Feststoffe enthält, durch Anschwemmen der Suspension an ein Sieb, Trocknen, Erwärmen und Formen des Bauteils unter Preßdruck.

2. Verfahren nach Anspruch 1,
**dadurch gekennzeichnet**, daß die wäßrige Suspension auf 0,4 bis 1,0 Masse-% Feststoffanteil verdünnt wird.

3. Verfahren nach Anspruch 1 oder 2,
**dadurch gekennzeichnet**, daß der Anteil der Naturfasern am Feststoffanteil der Suspension 30 bis 45 Masse-% beträgt.

4. Verfahren nach Anspruch 1,
**dadurch gekennzeichnet**, daß quarternäre Ammoniumverbindungen und/oder Polysaccharide als Fixierungsmittel der Suspension zugesetzt werden.

5. Verfahren nach einem der Ansprüche 1 bis 4,
**dadurch gekennzeichnet**, daß der Anteil Fixierungsmittel auf natürlicher und/oder synthetischer Basis im Feststoffanteil der Suspension 0,2 bis 2,5 Masse-% beträgt.

6. Verfahren nach Anspruch 1,
**dadurch gekennzeichnet**, daß das thermoplastische Material etwa je zur Hälfte aus Pulver und Fasern besteht.

7. Verfahren nach einem der Ansprüche 1 bis 6,
**dadurch gekennzeichnet**, daß der Suspension Bastfasern und/oder Hartfasern und/oder Holzfasern als Naturfasern zugesetzt werden.
